# EUROPEAN PATENT SPECIFICATION

(11) **EP 2 745 925 B1**
(45) Date of publication and mention of the grant of the patent: **29.11.2017**
(21) Application number: 12008542.8
(22) Date of filing: 21.12.2012
(51) Int. Cl.: B01J 8/08, B01J 8/12

(54) **Inlet system for settled bed polymerization reactors**
Einlasssystem für abgesetzte Bettpolymerisationsreaktoren
Système d'admission pour réacteurs de polymérisation à lit décanté

(43) Date of publication of application: 25.06.2014
(73) Proprietor: Borealis AG, 1220 Vienna (AT)
(72) Inventor: Kanellopoulos, Vasileios, 4040 Linz (AT); Al-Haj Ali, Mohammad, 00640 Helsinki (FI); Vahteri, Markku, 06100 Porvoo (FI); Tupe, Ravindra, Mumbai - 400050, Maharashtra (IN)
(74) Representative: Kador & Partner

(56) References cited:
- EP-A1- 2 495 038
- WO-A1-97/04015
- WO-A1-2009/080360
- US-A- 2 417 393

## Description

The present invention pertains to settled bed polymerization reactors, and the use of such settled bed polymerization reactors for the production of polyolefins.

Settled bed polymerization reactors are well known in the art. Settled bed polymerization reactors can be internal or external. For example, a settled bed polymerization reactor may be coupled to a gas phase reactor (see for example WO 2009/080360). In settled bed polymerization reactors, there are severe external heat and mass transfer limitations in gas-phase olefin polymerization. The limitations originate from the high solids concentration, i.e. > 45 wt.-% and the absence of sufficient gas-solids mixing.

In a settled bed the particles form a dense bed with some gas between the particles. The velocity of the particles with respect to the surrounding gas is low and thus the time required for the transport in the axial and/or radial direction of monomer(s), comonomer(s), chain transfer agents(s) and/or coolant is much higher than the particles residence time in the settled bed polymerization reactor.

Thus, contrary to conventional gas phase reactors, wherein the external heat and mass transfer limitations are practically irrelevant, in settled bed polymerization reactors, there is the need for overcoming these limitations.

The usefulness of settled bed polymerization reactors can be strongly undermined if the monomer is not evenly distributed within the settled bed as well as if the cooling agent to be used for heat removal is not properly distributed inside the bed. Monomer depletion across the settled bed height takes place if the monomer is fed in one location within the settled bed. This leads to a low monomer conversion as well as uneven composition and/or molecular weight distribution of the new polymer that is produced in the reactor and insofar results in poor polymer quality. Moreover, dead zones may be formed in areas where the monomer concentration is insufficient to maintain polymerization.

Thus, there is the need for a settled bed polymerization reactor which avoids uneven distribution and enables high monomer conversion finally resulting in enhanced polymer properties.

The present invention is based on the finding that these objects can be achieved by a settled bed polymerization reactor according to claim 1. More particularly the present invention is concerned with
a settled bed polymerization reactor, having several inlet-levels, each inlet-level comprising at least one inlet for injection of monomer, comonomer and/or coolant distributed over the height of the reactor,
wherein the vertical distance between two adjacent inlet-levels is equal to or lower than 0.25 x height of the reactor; and
wherein the number of inlet-levels is at least 3 and
wherein the height/diameter ratio of the reactor is larger than 4. The present invention is further concerned with a reactor assembly comprising a settled bed polymerization reactor and a gas phase reactor, wherein the ratio of the effective diameter of the settled bed polymerization reactor versus the effective diameter of the gas phase reactor is in the range of 0.25 to 0.55; and
wherein the settled bed polymerization reactor has several inlet-levels comprising at least one inlet per level for injection of monomer, comonomer, co-reactants and/or inert component(s) distributed over the height of the settled bed polymerization reactor,
wherein the vertical distance between two adjacent inlet-levels is equal to or lower than 0.25 x height of the settled bed polymerization reactor; and
wherein the number of inlet-levels is at least 3; and wherein the height/diameter ratio of the settled bed polymerization reactor is larger than 4, and wherein the settled bed polymerization reactor is an external settled reactor. In a further aspect, the present invention is concerned with the use of a settled bed polymerization reactor according to the present invention or the reactor assembly according to the present invention for the production of polyolefins.

In yet a further aspect, the present invention is concerned with a process for polymerizing olefins in a settled bed polymerization reactor, the reactor having several inlet-levels comprising at least one inlet per level for injection of monomer, comonomer, co-reactants and/or inert components distributed over the height of the reactor, whereby the distance between two inlet-levels is equal to or lower than 0.25 x height of the reactor, the number of inlet-levels is at least 3, the height/diameter ratio of the reactor is larger than 4 and the settled bed polymerization reactor is an external settled reactor wherein a settled bed of polymer particles having a base level and an upper level within said settled bed polymerization reactor is formed, comprising the steps of:
(i) introducing polymer particles containing active polymerization catalyst into said settled bed polymerization reactor above the upper level of said settled bed;
(ii) withdrawing polymer particles from the base level of said settled bed, thereby achieving a downward movement of polymer particles in said settled bed;
(iii) introducing olefin monomer, optionally together with one or more of comonomer(s), co-reactant(s) and inert component(s), into said settled bed, thereby causing polymerization in said settled bed,
characterized in that at least the monomer is introduced via at least two inlets, whereby said inlets are on two different inlet-levels.

A settled bed polymerization reactor is a moving bed reactor in tubular form. A settled bed polymerization reactor can be external or internal. An external settled bed polymerization reactor is coupled to a gas phase collector via a feeding pipe, whereby the feeding pipe connects to the external settled bed polymerization in the top part; an external settled bed polymerization reactor is further coupled to the gas phase collector via a recycling pipe, whereby the recycling pipe connects to the external settled bed polymerization in the bottom part.

A settled bed polymerization reactor, particularly an external settled bed polymerization reactor usually comprises three zones, a bottom zone, a middle zone and an upper zone, whereby the zones differentiate from each other by their effective cross-sectional diameter. A settled bed polymerization reactor need not have a circular cross section. Other cross sections such as ellipsoid or polygon are also possible.

The effective cross-sectional diameter is the diameter of a circular cross-section having identical area as a non-circular cross-section. For example, when the cross-section is ellipsoid, the effective cross-sectional diameter is the diameter of a circular cross-section having identical area as the ellipsoid cross-section. If not mentioned otherwise, the term diameter shall denote the effective cross-sectional diameter.

Inlets for injection of monomer, comonomer, co-reactant and/or coolant are nozzles well known in the art. The inlets can be used for monomer, comonomer, co-reactant and inert component separately and in combination.

Vertical distance between two inlet-levels denotes the distance in vertical direction. The plane forming an inlet-level shall be cross the centre of an inlet.

Height of the reactor is herein defined as the distance between the lowest part of the middle zone and the highest part of the middle zone. Usually the lowest part of the middle zone is the lowest end of the cylindrical section of the reactor housing. The highest part of the middle zone corresponds to the highest end of the cylindrical section where the upper zone has a different geometry from the middle zone. If the middle zone is not cylindrical, i.e. has a non-circular cross-section such as a ellipsoid cross-section, the definition shall apply accordingly.

Where the upper zone has the same shape and diameter as the middle zone the highest part of the middle zone is at the level which extends 0.8 times the combined height of the middle and upper zones above the lowest part of the middle zone.

Arrangement of the inlets in a semi-helical way means that the inlets are not positioned on a vertical line but are distributed over the surface of the settled bed polymerization reactor.

Arrangement of the inlets in helical way means that a curve drawn through the centres of all inlets is a helix. A helix is a space curve, whereby the tangent line at point has a constant angle with a fixed line also called axis.

A reactor assembly according to the present invention comprises at least one settled bed polymerization and at least one gas phase reactor. When there is more than one settled bed polymerization reactor or more than one gas phase reactor, the requirements as set forth in the claims have to apply for at least two reactors coupled together.

Polyolefins according to the present invention denotes homo- or copolymers originating from at least 50% olefinic monomer units.

Polyethylene polymers according to the present invention comprise homo- or copolymers originating from at least 50% ethylene monomer units.

Polypropylene polymers according to the present invention comprise homo- or copolymers originating from at 50% propylene monomer units.

Solids circulation rate is the amount of material transferred from the settled bed polymerization reactor back to the gas phase reactor.

Base level of a settled bed of polymer particles denotes the lower vertical end of settled polymer particles in the reactor. Usually the base level will be the identical with the lower end of the settled bed reactor.

Upper level of a settled bed of polymer particles denotes the upper vertical end of the settled polymer particles in the reactor. The upper level of the settled bed polymer particles is always somewhat below the vertical top end of the reactor.

In settled bed the polymer particles are in a settled (non-fluidized) state. The bed is formed by the particles with some gas between them. The particles within the bed may be either stagnant (fixed bed) or moving (moving bed).

The present invention avoids monomer depletion in the reactor. Moreover dead reaction zones easily can be avoided. In a further aspect, the uniform monomer concentration results in uniform polymer production and excellent temperature control in the reactor. Hot spots inside the reactor are avoided. The good heat removal further results in the absence of agglomerates.

In a further aspect, the present invention guarantees stable operation of the external settled bed polymerization reactor and flexibility of operation under different material velocities.

In yet a further aspect, the present invention allows lower materials recirculation rates.

In yet a further aspect the present invention enables the production of softer and stickier polymer. Even more important, the present invention allows the use of less active catalysts due to the increased residence time. In other words, the process window as to the polymer softness and catalyst activity is enlarged.

In the settled bed polymerization reactor according to the present invention the vertical distance between two adjacent inlet-levels is preferably equal to or lower than 0.20 x height of the reactor, more preferably lower than 0.15 x height of the reactor and most preferably lower than 0.10 x height of the reactor. Usually the vertical distance between two adjacent inlet-levels will be higher than 0.01 x height of the reactor. The distance and insofar also number of inlet-levels will usually be selected from a commercial point of view. A shorter vertical distance allows better polymer quality but enhances the complexity and costs.

The number of inlet-levels of the settled bed polymerization reactor according to the present invention is at least 3, more preferably [height of the reactor / 0.15 x height of the reactor] - 1, and most preferably [height of the reactor / 0.10 x height of the reactor] - 1. Usually number of inlet-levels will not be higher than [height of the reactor / 0.01 x height of the reactor] - 1.

The settled bed polymerization reactor according to the present invention is an external settled reactor.

According to the present invention the height/diameter ratio of the settled bed polymerization reactor is larger than 4, more preferably larger than 5, and most preferably larger than 5.5. Usually the height/diameter ratio of the settled bed polymerization reactor is not higher than 10.

According an additional preferred embodiment there is more than one inlet per inlet-level. The number of inlets per inlet-level can range from 1 to 10 depending on the needs. It is self-explaining that for a relatively big reactor, the number of inlets per inlet-level is preferably 4 to 10, more preferably 5 to 8. For small and medium size reactors the number of inlets per inlet-level will be from 2 to 5, more preferably 2 to 4.

In the simplest arrangement the inlets of the settled bed polymerization reactor according to the present invention are arranged in vertical orientation where the inlets lie in a line parallel to the vertical axis of the settled bed polymerization reactor. When there is more than one inlet per inlet-level there may be the same number of vertical lines.

According to one preferred embodiment the inlets of the settled bed polymerization reactor according to the present invention are arranged in a semi-helical way, i.e. the inlets are not positioned on a vertical line but are distributed over the surface of the settled bed polymerization reactor. There are countless possibilities.

According to a preferred embodiment two inlets on the same inlet-level may be located on the opposite sides of the settled bed polymerization reactor, i.e., are shifted by 180° across the circumference of the reactor.

According to another preferred embodiment two inlets on adjacent inlet-levels may be located on the opposite sides of the settled bed polymerization reactor, i.e., are shifted by 180° across the circumference of the reactor.

Alternatively, four inlets per inlet-level may be arranged so that each inlet is separated by 90° of the circumference. Preferably, the inlets are then arranged symmetrically along the circumference.

According to another preferred embodiment the inlets of the settled bed polymerization reactor according to the present invention can preferably be arranged in a helical way. When there is more than one inlet per inlet-level there may be the same number of helix curves.

The settled bed polymerization reactor according to the present invention preferably uses at least one inlet for the injection of a support gas. Usually the inlet(s) on the lowest inlet-level are used for this purpose. When the number of inlet-levels is considerably high, the use of a single inlet-level may not be adequate for the purpose of injecting the support gas. Thus, the inlet-levels up to a level of (0.1 x total inlet-level height) measured from the lowest inlet-level shall be used. The total inlet-level height shall be the distance from the lowest inlet level up to the highest inlet level.

The settled bed polymerization reactor according to the present invention preferably comprises at least one inlet for the injection of a barrier gas. Such an inlet is located in the upper zone of the settled bed polymerization reactor. The upper zone of the settled bed polymerization reactor shall mean the volume above the middle zone of the reactor as hereinbefore defined. Especially, it means the volume which is above the level extending 0.8 times the combined height of the middle and upper zones above the lower end of the middle zone.

When the settled bed polymerization reactor according to the present invention is used in combination with a gas phase reactor, the combination is denoted reactor assembly.

The gas phase reactor may either be a fluidized bed reactor or more preferably a double cone reactor, i.e. a gas phase reactor comprising a bottom zone of conical shape, a cylindrical middle zone and a top zone of conical shape. Most preferably the gas phase reactor of the reactor assembly according to the present invention is a double cone reactor without a distribution plate.

All preferred ranges and embodiments as to the settled bed polymerization reactor shall also apply for the reactor assembly.

In the reactor assembly according to the present invention, the ratio of the effective diameter of the settled bed polymerization reactor versus the effective diameter of the gas phase reactor is in the range of 0.25 to 0.55, preferably 0.30 to 0.50, more preferably 0.40 to 0.48 and most preferably 0.43 to 0.47.

In a further aspect the reactor assembly according to the present invention preferably has a ratio of the height of the settled bed polymerization reactor versus the height of the gas phase reactor in the range of 0.15 to 0.65, more preferably 0.25 to 0.60, even more preferably 0.35 to 0.55 and most preferably 0.40 to 0.50.

The settled bed polymerization reactor and the reactor assembly according to the present invention may preferably be used for the production of polyolefins, particularly for the production of polyethylene homo- or copolymers and polypropylene homo- or copolymers. The settled bed polymerization reactor and the reactor assembly according to the present invention enable a higher homogeneity and insofar a better polymer quality. The higher residence time in the settled bed polymerization reactor further allows the production of softer and stickier polymers and/or the use of catalysts showing relatively low reactivity.

In the inventive use for the production of polyethylene homo- or copolymers according to the present invention the solids circulation rate between the reactors is preferably between 100 to 250 kg/h per m³ volume of the settled bed polymerization reactor, more preferably 150 to 200 kg/h per m³ volume of the settled bed polymerization reactor.

The present invention further provides a process for polymerizing olefins in a settled bed polymerization reactor according to claim 9. The inventive process is preferably carried out with the settled bed polymerization reactor according to the present invention or the reactor assembly according to the present invention. All preferred ranges and embodiments described as to the reactor or the assembly shall also apply to the process.

In the process according to the present invention, the polymer particles flow downwards in the settled bed polymerization reactor with a velocity of no more than 0.13 m/s, preferably no more than 0.1 m/s.

The process according to the present invention is preferably beneficial for the production of polyethylene homo- or copolymers. The inventive process particularly allows the production of a wide range of polyethylene copolymers, whereby the one or more comonomer(s) is/are selected from the group of C4 to C10 alpha-olefins.

In the process according to the present invention it is preferred to introduce a barrier gas into the settled bed polymerization reactor above the upper level of the settled bed.

The inlets can be used together, i.e. all inlets can be used for the feeding monomer, comonomer, co-reactant, and/or coolant. However, it is possible to use only a part of the inlets.

Increasing the number of active feeding points, improves, i.e. lowers the concentration gradient inside the reactor. The concentration gradient will depend on the feeding position.

It has been found that the monomer concentration is essentially constant slightly above and below the inlet. Slightly above and below the inlet means in the range of ± 0.05 x height of the reactor from the centre of the inlet. For example, for a reactor having a height of 400 cm with 10 inlets in a height of 20 cm, 60 cm, 100 cm, 140 cm, 180 cm, 220 cm, 260 cm, 300 cm, 340 cm and 380cm, the monomer concentration is essentially constant over the whole reactor.

In many applications such as the production of polyethylene the monomer concentration practically need not be fully constant. For example, for a reactor having a height of 400 cm with 3 inlets in a height of 100 cm, 200 cm, and 300 cm the variation of the monomer concentration still is acceptable although a variation of the concentration of about 35% occurs.

### Description of figures

- Fig. 1: External Settled bed polymerization Reactor (eDT) with multiple feeding points for monomer(s), comonomer(s), chain transfer agent(s) and cooling agent(s). The number of feeding points used in this figure is exemplary.
- 1: Settled-bed reactor
- 2: Inlet for polymer
- 3: Outlet for gas
- 4: Outlet for polymer
- 5: Inlets for olefin monomer, comonomer, chain growth controller, chain transfer agent, coolant,and inert gas. Lowest inlet is used for support gas
- 6: Inlet for barrier gas
- Fig. 2: The concentration of the monomer in the external settled bed polymerization reactor depending on the height of the reactor. Several use cases with different numbers of feeding points (N_{Inj}), and there heights h in relation to the reactor height (H_{eDT}) are depicted.

### Figures

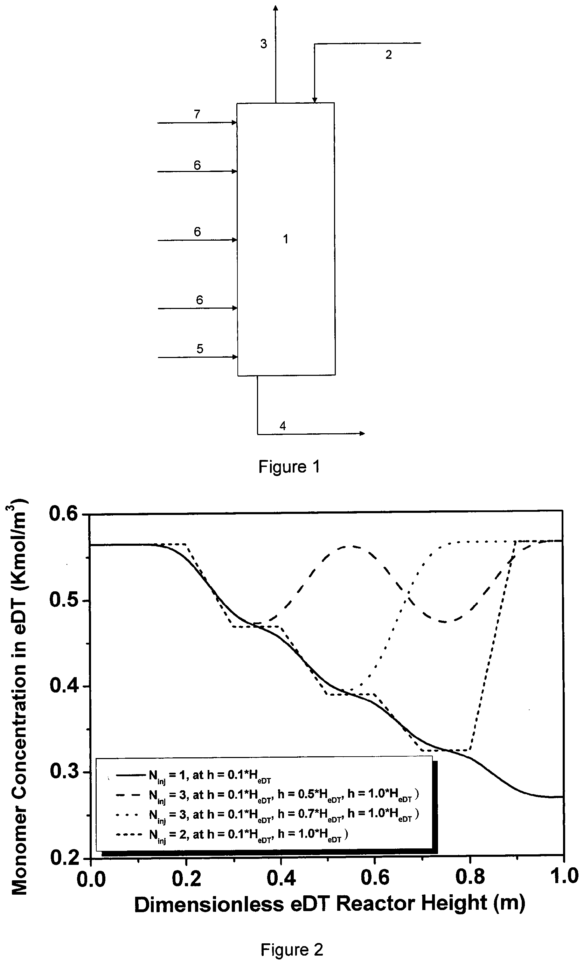

Figure 1 shows an external settled bed polymerization reactor, which operates in between two gaseous phase reactors (GPR). As an example, three inlets 6 for injecting monomers, comonomers, co-reactant and inert component are depicted. In addition to that the reactor contains an inlet 6 for barrier gas.

Figure 2 illustrates the effect of different numbers of feeding points and their distances on the distribution of monomer concentration among the height of the reactor. A single feeding point (red line / bold line) close to the bottom of the eDT middle zone results in a large decrease in monomer concentration among the reactor height (∼ 55%) possibly causing problems in the polymerization reaction due to monomer depletion. Three feeding points (blue line / dotted line) result in a more homogenous distribution of monomer concentration in the reactor. However, this improvement depends on the location, i.e. the distance between the feeding points. Moving the second feeding point from a position equidistant to the others closer to one of the others (black line / dashed line) let the oscillations in the monomer concentration gradient become larger. This proves the need to select the positions of feeding points along the reactor height.

### Examples

### Example 1:

An apparatus comprising a fluidized bed and a settled bed polymerization reactor (eDT) was used:
The double cone reactor had a reactor body without including a fluidization grid, a conical shape of the bottom section, a cylindrical polymerization section containing the fluidized bed above the bottom cone, having a diameter of 540 mm, a height of 2700 mm (bottom to top) and a conical top part.

At the side of the double cone reactor a settled bed polymerization reactor having a cylindrical reactor body with a diameter of 250 mm was positioned. The outlet of the settled bed polymerization reactor was within the polymerization section of the double cone reactor at the height of 100 mm above the bottom cone. The height of the settled bed polymerization reactor was 1200 mm and the inlet of the settled bed polymerization reactor was connected to the bottom part of the double cone reactor close to the top of the cone at a height of 500 mm above the very bottom cone end. The settled bed polymerization reactor contained 3 gas inlets for feeding gas into the reactor. The inlets were arranged so that the distance between them was 400 mm at height, 200 mm, 600 mm and 1000 mm from the bottom in helical arrangement.

Ethylene was copolymerized in the above-mentioned reactor system as follows.

The temperature within the double cone reactor was 85 °C and the pressure 20 bar. The ethylene concentration was about 25 % by mole. The hydrogen to ethylene ratio was 8 mol/kmol and the 1-hexene to ethylene ratio was 30 mol/kmol. The remainder of the gas within the double cone reactor was mainly propane and nitrogen. The height of the fluidized bed was 2700 mm mm above the bottom reactor cone. The polymer production rate in the double cone reactor was 64.5 kg/h.

From the upper part of the double cone reactor a stream of polymer was taken into the settled bed polymerization reactor which was operated at a temperature of 85 °C and a pressure of 20 bar. The polymer flowed downwards with a rate of about 0.04 m/s and the height of the moving bed was 1200 mm. The concentration of ethylene within the settled bed polymerization reactor was 0.07 kmol/m³ when all injection points were on operation and 0.07 kmol/m³ to 0.03 kmol/m³ along the moving bed length when only one injection point (that one close to the reactor top) was in operation. The ratio of hydrogen to ethylene was 0.0. The polymer production rate within the settled bed polymerization reactor was 10.5 kg/h and the solids circulation rate between the reactors was 3000 kg/h. The polymer was reintroduced from the bottom of the settled bed polymerization reactor into the double cone reactor.

Polymer was continuously withdrawn from the double cone reactor at a rate of 75 kg/h.

### Example 2:

An apparatus comprising a double cone reactor (DCR) and a settled bed polymerization reactor was as follows. The double cone reactor had a reactor body without including a fluidization grid near the bottom of the reactor, a cylindrical polymerization section containing the fluidized bed above the bottom cone, having a diameter of 540 mm, a height of 2700 mm and a conical top part.

At the side of the double cone reactor there was a settled bed polymerization reactor having a cylindrical reactor body with a diameter of 250 mm. The outlet of the settled bed polymerization reactor was within the polymerization section of the double cone reactor at the height of 100 mm above the bottom cone. The height of the settled bed polymerization reactor was 1200 mm and the inlet of the settled bed polymerization reactor was connected to the bottom part of the double cone reactor close to the top of the cone at a height of 500 mm above the very bottom cone end. The settled bed polymerization reactor contained 3 gas inlets for feeding gas into the reactor. The inlets were arranged so that the distance between them was 400 mm at height, 200 mm, 600 mm and 1000 mm from the bottom in helical arrangement.

Ethylene was copolymerized in the above-mentioned reactor system as follows.

The temperature within the double cone reactor was 85 °C and the pressure 20 bar. The ethylene concentration was 25 % by mole. The hydrogen to ethylene ratio was 8 mol/kmol and the 1-hexene to ethylene ratio was 30 mol/kmol. The remainder of the gas within the fluidized bed reactor was mainly propane and nitrogen. The height of the fluidized bed was 2700 mm above the bottom reactor cone. The polymer production rate in the fluidized bed reactor was 64.5 kg/h.

From the upper part of the double cone reactor a stream of polymer was taken into the settled bed polymerization reactor which was operated at a temperature of 85 °C and a pressure of 20 bar. The polymer flowed downwards with a rate of about 0.025 m/s and the height of the moving bed was 1200 mm. The concentration of ethylene within the settled bed polymerization reactor was 0.12 kmol/m³ when all injection points were on operation and from 0.12 kmol/m³ to 0.05 kmol/m³ along the moving bed length when only one injection point (that one close to the reactor top) was in operation. The ratio of hydrogen to ethylene was 0.0. The polymer production rate within the settled bed polymerization reactor was 10.5 kg/h and the solids circulation rate between the reactors was 1850 kg/h. The polymer was reintroduced from the bottom of the settled bed polymerization reactor into the double cone reactor.

In the case where the ethylene amount was introduced via one injection point (i.e., that one placed on the top part, at a height equal to 1000 mm from the eDT bottom) excessive agglomeration was observed in the moving bed due to local hot spots (i.e., the temperature measurement shows temperature difference values over 15 °C).

Polymer was continuously withdrawn from the fluidized bed reactor at a rate of 75 kg/h.

### Example 3:

An apparatus comprising a fluidized bed reactor (FBR) and a settled bed polymerization reactor was as follows. The fluidized bed reactor had a reactor body including a fluidization grid near the bottom of the reactor, a cylindrical polymerization section containing the fluidized bed above the fluidization grid, having a diameter of 800 mm, and a disengagement zone above the cylindrical section including a cylindrical part having a diameter of 1600 mm and a conical section connecting the two cylindrical sections.

At the side of the fluidized bed reactor there was a settled bed polymerization reactor having a cylindrical reactor body with a diameter of 280 mm. The inlet of the settled bed polymerization reactor was within the polymerization section of the fluidized bed reactor at the height of 1600 mm above the fluidization grid. The height of the settled bed polymerization reactor was 600 mm and the outlet of the settled bed polymerization reactor was connected to the polymerization section of the fluidized bed reactor at the height of 200 mm above the fluidization grid. The settled bed polymerization reactor contained 3 gas inlets for feeding gas into the reactor. The inlets were arranged so that their distance between them was 200 mm at height, 100 mm, 300 mm and 500 mm from the bottom, placed so that one was in opposite direction with respect to the other.

Ethylene was copolymerized in the above-mentioned reactor system as follows.

The temperature within the fluidized bed reactor was 85 °C and the pressure 20 bar. The ethylene concentration was about 25 % by mole. The hydrogen to ethylene ratio was 8 mol/kmol and the 1-hexene to ethylene ratio was 30 mol/kmol. The remainder of the gas within the fluidized bed reactor was mainly propane and nitrogen. The height of the fluidized bed was 1900 mm above the fluidization grid. The polymer production rate in the fluidized bed reactor was 67.5 kg/h.

From the upper part of the fluidized bed a stream of polymer was taken into the settled bed polymerization reactor which was operated at a temperature of 85 °C and a pressure of 20 bar. The polymer flowed downwards with a rate of about 0.025 m/s and the height of the moving bed was 550 mm. The concentration of ethylene within the settled bed polymerization reactor was 0.07 kmol/m³ when all injection points were on operation and from 0.07 kmol/m³ to 0.02 kmol/m³ along the moving bed length when only one injection point (that one close to the reactor top) was in operation. The ratio of hydrogen to ethylene was 0.0. The polymer production rate within the settled bed polymerization reactor was 7.5 kg/h and the solids circulation rate between the reactors was 2200 kg/h. The polymer was reintroduced from the bottom of the settled bed polymerization reactor into the fluidized bed reactor.

Polymer was continuously withdrawn from the fluidized bed reactor at a rate of 75 kg/h.

### Example 4:

An apparatus comprising a fluidized bed reactor (FBR) and a settled bed polymerization reactor was as follows. The fluidized bed reactor had a reactor body including a fluidization grid near the bottom of the reactor, a cylindrical polymerization section containing the fluidized bed above the fluidization grid, having a diameter of 800 mm, and a disengagement zone above the cylindrical section including a cylindrical part having a diameter of 1600 mm and a conical section connecting the two cylindrical sections.

At the side of the fluidized bed reactor there was a settled bed polymerization reactor having a cylindrical reactor body with a diameter of 280 mm. The inlet of the settled bed polymerization reactor was within the polymerization section of the fluidized bed reactor at the height of 1600 mm above the fluidization grid. The height of the settled bed polymerization reactor was600 mm and the outlet of the settled bed polymerization reactor was connected to the polymerization section of the fluidized bed reactor at the height of 200 mm above the fluidization grid. The settled bed polymerization reactor contained 3 gas inlets for feeding gas into the reactor. The inlets were arranged so that their distance between them was 200 mm at height, 100 mm, 300 mm and 500 mm from the bottom, placed so that one was in opposite direction with respect to the other.

Ethylene was copolymerized in the above-mentioned reactor system as follows.

The temperature within the double cone reactor was 85 °C and the pressure 20 bar. The ethylene concentration was 25 % by mole. The hydrogen to ethylene ratio was 8 mol/kmol and the 1-hexene to ethylene ratio was 30 mol/kmol. The remainder of the gas within the fluidized bed reactor was mainly propane and nitrogen. The height of the fluidized bed was 1900 mm above the fluidization grid. The polymer production rate in the fluidized bed reactor was 67.5 kg/h.

From the upper part of the fluidized bed a stream of polymer was taken into the settled bed polymerization reactor which was operated at a temperature of 85 °C and a pressure of 20 bar. The polymer flowed downwards with a rate of about 0.015 m/s and the height of the moving bed was 550 mm. The concentration of ethylene within the settled bed polymerization reactor was 0.115 kmol/m³ when all injection points were on operation and from 0.115 kmol/m³ to 0.045 kmol/m³ along the moving bed length when only one injection point (that one close to the reactor top) was in operation. The ratio of hydrogen to ethylene was 0.0. The polymer production rate within the settled bed polymerization reactor was 7.5 kg/h and the solids circulation rate between the reactors was 1320 kg/h. The polymer was reintroduced from the bottom of the settled bed polymerization reactor into the fluidized bed reactor.

Polymer was continuously withdrawn from the fluidized bed reactor at a rate of 75 kg/h.

In the case where the ethylene amount was introduced via one injection point (i.e., that one placed on the top part, at a height equal to 500mm from the eDT bottom) excessive agglomeration was observed in the moving bed due to local hot spots (i.e., the temperature measurement shows DT values over 35 °C).

### Example 5:

An apparatus comprising a fluidized bed reactor (FBR) and a settled bed polymerization reactor was as follows. The fluidized bed reactor had a reactor body including a fluidization grid near the bottom of the reactor, a cylindrical polymerization section containing the fluidized bed above the fluidization grid, having a diameter of 3000 mm, and a disengagement zone above the cylindrical section including a cylindrical part having a diameter of 4600 mm and a conical section connecting the two cylindrical sections.

At the side of the fluidized bed reactor there was a settled bed polymerization reactor having a cylindrical reactor body with a diameter of 1300 mm. The inlet of the settled bed polymerization reactor was within the polymerization section of the fluidized bed reactor at the height of 15100 mm above the fluidization grid. The height of the settled bed polymerization reactor was 7000 mm and the outlet of the settled bed polymerization reactor was connected to the polymerization section of the fluidized bed reactor at the height of 4000 mm above the fluidization grid. The settled bed polymerization reactor contains 5 gas inlets for feeding gas into the reactor. The inlets are arranged so that the distance between them was 1500 mm at heights 500 mm, 2000 mm, 3500 mm, 5000 mm and 6500 mm from the bottom, placed so that one was in opposite direction with respect to the other.

## Claims

1. Settled bed polymerization reactor (1), having several inlet-levels comprising at least one inlet comprising at least one inlet (5) per level for injection of monomer, comonomer, co-reactant and/or inert component distributed over the height of the reactor,
wherein the vertical distance between two adjacent inlet-levels is equal to or lower than 0.25 x height of the reactor; and
wherein the number of inlet-levels is at least 3; and
wherein the height/diameter ratio of the reactor is larger than 4, and
wherein the settled bed polymerization reactor is an external settled reactor.

2. Settled bed polymerization reactor according to claim 1, wherein the inlets (5) are arranged in a semi-helical way.

3. Settled bed polymerization reactor according to claim 1, wherein the inlets (5) are arranged in a helical way.

4. Reactor assembly comprising a settled bed polymerization reactor (1) and a gas phase reactor,
wherein the ratio of the effective diameter of the settled bed polymerization reactor versus the effective diameter of the gas phase reactor is in the range of 0.25 to 0.55, and
wherein the settled bed polymerization reactor has several inlet-levels comprising at least one inlet (5) per level for injection of monomer, comonomer, co-reactant and/or inert component distributed over the height of the settled bed polymerization reactor,
wherein the vertical distance between two adjacent inlet-levels is equal to or lower than 0.25 x height of the settled bed polymerization reactor; and
wherein the number of inlet-levels is at least 3; and
wherein the height/diameter ratio of the settled bed polymerization reactor is larger than 4, and
wherein the settled bed polymerization reactor is an external settled reactor.

5. Reactor assembly comprising a settled bed polymerization reactor and a gas phase reactor according to claim 4, wherein the ratio of the height of the settled bed polymerization reactor versus the height of the gas phase reactor is in the range of 0.15 to 0.65.

6. Use of the settled bed polymerization reactor according to claims 1 - 3 or the reactor assembly according to claims 4 or 5, for the production of polyolefins.

7. Use according to claim 6, for the production of polyethylene homo- or copolymers and polypropylene homo- or copolymers.

8. Use of the reactor assembly according to claims 4 or 5 for the production of polyethylene homo- or copolymers wherein the solids circulation rate between the reactors is 100 to 250 kg/h per m³ volume of the settled bed polymerization reactor.

9. Process for polymerizing olefins in a settled bed polymerization reactor (1),
the reactor having several inlet-levels comprising at least one inlet (5) per level for injection of monomer, comonomer, co-reactants and/or inert components distributed over the height of the reactor, whereby the distance between two inlet-levels is equal to or lower than 0.25 x height of the reactor, the number of inlet-levels is at least 3, the height/diameter ratio of the reactor is larger than 4 and wherein the settled bed polymerization reactor is an external settled reactor
wherein a settled bed of polymer particles having a base level and an upper level within said settled bed polymerization reactor is formed, comprising the steps of:
(i) introducing polymer particles containing active polymerization catalyst into said settled bed polymerization reactor above the upper level of said settled bed;
(ii) withdrawing polymer particles from the base level of said settled bed, thereby achieving a downward movement of polymer particles in said settled bed;
(iii) introducing olefin monomer, optionally together with one or more of comonomer(s), co-reactant(s) and inert component(s), into said settled bed, thereby causing polymerization in said settled bed,
**characterized in that** at least the monomer is introduced via at least two inlets, whereby said inlets are on two different inlet-levels.

10. The process according to claim 9 wherein the polymer particles flow downwards with a velocity of no more than 0.13 m/s, preferably no more than 0.1 m/s.The process according to any one of claims 9 or 10 wherein the olefin monomer is ethylene.

11. The process according to claim 11 wherein the comonomers are selected from the group of C4 to C10 alpha-olefins.

12. The process according to any one of the claims 9 to 12 wherein a barrier gas is introduced into the settled bed polymerization reactor above the upper level of the settled bed.

## Patentansprüche

1. Absetzbettpolymerisationsreaktor (1), der mehrere Einlassebenen aufweist, umfassend mindestens einen Einlass, umfassend mindestens einen Einlass (5) pro Ebene zur Injektion von Monomer, Comonomer, Coreaktant und/oder inerter Komponente verteilt über die Höhe des Reaktors,
wobei der vertikale Abstand zwischen zwei benachbarten Einfassebenen gleich zu oder weniger als 0,25 x Höhe von dem Reaktor beträgt; und wobei die Anzahl der Einlassebenen mindestens 3 beträgt; und
wobei das Höhe/Durchmesser-Verhältnis von dem Reaktor größer als 4 ist, und
wobei der Absetzbettpolymerisationsreaktor ein externer Absetzreaktor ist.

2. Absetzbettpoiyrnerisationsreaktor nach Anspruch 1, wobei die Einlässe (5) auf eine semihelikale Weise angeordnet sind.

3. Absetzbettpolymerisationsreaktor nach Anspruch 1, wobei die Einlässe (5) auf eine helikale Weise angeordnet sind.

4. Reaktoranordnung, umfassend einen Absetzbettpolymerisatlonsreaktor (1) und einen Gasphasenreaktor,
wobei das Verhältnis von dem effektiven Durchmesser des Absetzbettpolymerisationsreaktors zu dem effektiven Durchmesser des Gasphasenreaktors in dem Bereich von 0,25 bis 0,55 liegt, und
wobei der Absetzbettpolymerisationsreaktor mehrere Einlassebenen umfasst, umfassend mindestens einen Einlass (5) pro Ebene zur Injektion von Monomer, Comonomer, Coreaktant und/oder inerter Komponente verteilt über die Höhe des Absetzbettpolymerisationsreaktors,
wobei der vertikale Abstand zwischen zwei benachbarten Einlassebenen gleich zu oder weniger als 0,25 x Höhe von dem Absetzbettpolymerisationsreaktor beträgt; und
wobei die Anzahl der Einlassebenen mindestens 3 beträgt; und
wobei das Höhe/Durchmesser-Verhältnis von dem Absetzbettpolymerisationsreaktor größer als 4 ist, und
wobei der Absetzbettpolymerisationsreaktor ein externer Absetzreaktor ist.

5. Reaktoranordnung, umfassend einen Absetzbettpolymerisationsreaktor und einen Gasphasenreaktor, nach Anspruch 4, wobei das Verhältnis von der Höhe des Absetzbettpolymerisationsreaktors zu der Höhe des Gasphasenreaktors in dem Bereich von 0,15 bis 0,65 liegt.

6. Verwendung von dem Absetzbettpolymerisationsreaktor nach den Ansprüchen 1-3 oder der Reaktoranordnung nach den Ansprüchen 4 oder 5 für die Herstellung von Polyolefinen.

7. Verwendung nach Anspruch 6 für die Herstellung von Polyethylenhomo-oder -copolymeren und Polypropylenhomo- oder -copolymeren.

8. Verwendung der Reaktoranordnung nach den Ansprüchen 4 oder 5 für die Herstellung von Polyethylenhomo- oder -copolymeren, wobei die Feststoffzirkulationsrate zwischen den Reaktoren 100 bis 250 kg/h pro m³ Volumen des Abseizbettpolymerisationsreaktors beträgt.

9. Verfahren zum Polymerisieren von Olefinen in einem Absetzbettpolymerisationsreaktor (1),
wobei der Reaktor mehrere Einlassebenen aufweist, umfassend mindestens einen Einlass (5) pro Ebene zur Injektion von Monomer, Comonomer, Coreaktanten und/oder inerten Komponenten verteilt über die Höhe des Reaktors, wobei der Abstand zwischen zwei Einlassebenen gleich zu oder weniger als 0,25 x Höhe von dem Reaktor beträgt, die Anzahl der Einlassebenen mindestens 3 beträgt, das Höhe/DurchmesserVerhältnis von dem Reaktor größer als 4 ist, und wobei der Absetzbettpolymerisationsreaktor ein externer Absetzreaktor ist,
wobei ein Absetzbett von Polymerpartikeln, das ein Basisniveau und ein oberes Niveau aufweist, innerhalb des Absetzbettpolymerisationsreaktors gebildet wird, umfassend die folgenden Schritte:
(i) Einführen von Polymerpartikeln, die aktiven Polymerisationskatalysator enthalten, in den Absetzbettpolymerisationsreaktor über das obere Niveau von dem Absetzbett;
(ii) Abziehen von Polymerpartikeln aus dem Basisniveau von dem Absetzbett, wodurch eine nach unten gerichtete Bewegung von Polymerpartikeln in dem Absetzbett erreicht wird;
(iii) Einführen von Olefinmonomer, optional zusammen mit einem oder mehreren Comonomer(en), Coreaktant(en) und inerter Komponente(n) in das Absetzbett, wodurch eine Polymerisation in dem Absetzbett hervorgerufen wird,
**dadurch gekennzeichnet, dass** zumindest das Monomer über mindestens zwei Einlässe eingeführt wird, wobei sich die Einlässe auf zwei unterschiedlichen Einlassebenen befinden.

10. Verfahren nach Anspruch 9, wobei die Polymerpartikel mit einer Geschwindigkeit von nicht mehr als 0,13 m/s, vorzugsweise nicht mehr als 0,1 m/s nach unten strömen. Verfahren nach einem der Ansprüche 9 oder 10, wobei das Olefinmonomer Ethylen Ist

11. Verfahren nach Anspruch 11, wobei die Comonomere aus der Gruppe von C4 bis C10 alpha-Olefinen ausgewählt sind.

12. Verfahren nach einem der Ansprüche 9 bis 12, wobei über das obere Niveau von dem Absetzbett ein Barrieregas in den Absetzbettpolymerisationsreaktor eingeführt wird.

## Revendications

1. Réacteur de polymérisation à lit décanté (1), présentant plusieurs niveaux d'entrée comprenant au moins une entrée comprenant au moins un orifice d'entrée (5) par niveau pour l'injection d'un monomère, d'un comonomère, d'un co-réactif et/ou d'un composant inerte répartis sur la hauteur du réacteur,
dans lequel la distance verticale entre deux niveaux d'entrée adjacents est inférieure ou égale à 0,25 x hauteur du réacteur ; et
dans lequel le nombre de niveaux d'entrée est d'au moins 3 ; et
dans lequel le rapport hauteur/diamètre du réacteur est supérieur à 4, et
dans lequel le réacteur de polymérisation à lit décanté est un réacteur décanté externe.

2. Réacteur de polymérisation à lit décanté selon la revendication 1, dans lequel les entrées (5) sont agencées de manière semi-hélicoïdale.

3. Réacteur de polymérisation à lit décanté selon la revendication 1, dans lequel les entrées (5) sont agencées de manière hélicoïdale.

4. Ensemble réacteur comprenant un réacteur de polymérisation à lit décanté (1) et un réacteur en phase gazeuse,
dans lequel le rapport du diamètre effectif du réacteur de polymérisation à lit décanté par rapport au diamètre effectif du réacteur en phase gazeuse se situe dans la plage de 0,25 à 0,55, et
dans lequel le réacteur de polymérisation à lit décanté présente plusieurs niveaux d'entrée comprenant au moins un orifice d'entrée (5) par niveau pour l'injection d'un monomère, d'un comonomère, d'un co-réactif et/ou d'un composant inerte répartis sur la hauteur du réacteur de polymérisation à lit décanté,
dans lequel la distance verticale entre deux niveaux d'entrée adjacents est inférieure ou égale à 0,25 x hauteur du réacteur de polymérisation à lit décanté ; et
dans lequel le nombre de niveaux d'entrée est d'au moins 3 ; et
dans lequel le rapport hauteur/diamètre du réacteur de polymérisation à lit décanté est supérieur à 4, et
dans lequel le réacteur de polymérisation à lit décanté est un réacteur décanté externe.

5. Ensemble réacteur comprenant un réacteur de polymérisation à lit décanté et un réacteur en phase gazeuse selon la revendication 4, dans lequel le rapport de la hauteur du réacteur de polymérisation à lit décanté par rapport à la hauteur du réacteur en phase gazeuse se situe dans la plage de 0,15 à 0,65.

6. Utilisation du réacteur de polymérisation à lit décanté selon les revendications 1 à 3 ou de l'ensemble réacteur selon les revendications 4 ou 5, pour la production de polyoléfines.

7. Utilisation selon la revendication 6, pour la production d'homopolymères ou de copolymères de polyéthylène et d'homopolymères ou de copolymères de polypropylène.

8. Utilisation de l'ensemble réacteur selon les revendications 4 ou 5 pour la production d'homopolymères ou de copolymères de polyéthylène, dans laquelle le taux de circulation des matières solides entre les réacteurs est de 100 à 250 kg/h par m³ de volume du réacteur de polymérisation à lit décanté.

9. Procédé de polymérisation d'oléfines dans un réacteur de polymérisation à lit décanté (1),
le réacteur présentant plusieurs niveaux d'entrée comprenant au moins un orifice d'entrée (5) par niveau pour l'injection d'un monomère, d'un comonomère, de co-réactifs et/ou de composants inertes répartis sur la hauteur du réacteur, selon lequel la distance entre deux niveaux d'entrée est inférieure ou égale à 0,25 x hauteur du réacteur, le nombre de niveaux d'entrée est d'au moins 3, le rapport hauteur/diamètre du réacteur est supérieur à 4 et
dans lequel le réacteur de polymérisation à lit décanté est un réacteur décanté externe dans lequel un lit décanté de particules de polymère présentant un niveau de base et un niveau supérieur à l'intérieur dudit réacteur de polymérisation à lit décanté est formé, comprenant les étapes consistant à :
(i) introduire des particules de polymère contenant un catalyseur de polymérisation actif dans ledit réacteur de polymérisation à lit décanté au-dessus du niveau supérieur dudit lit décanté ;
(ii) retirer les particules de polymère du niveau de base dudit lit décanté, pour ainsi obtenir un mouvement descendant des particules de polymère dans ledit lit décanté ;
(iii) introduire un monomère d'oléfine, facultativement conjointement avec un ou plusieurs parmi un (des) comonomère(s), un (des) co-réactif(s) et un (des) composant(s) inerte(s), dans ledit lit décanté, provoquant ainsi la polymérisation dans ledit lit décanté,
**caractérisé en ce qu'**au moins le monomère est introduit par l'intermédiaire d'au moins deux entrées, lesdites entrées se trouvant sur deux niveaux d'entrée différents.

10. Procédé selon la revendication 9, dans lequel les particules de polymère s'écoulent vers le bas avec une vitesse non supérieure à 0,13 m/s, de préférence non supérieure à 0,1 m/s. Procédé selon l'une quelconque des revendications 9 ou 10, dans lequel le monomère d'oléfine est de l'éthylène.

11. Procédé selon la revendication 11 dans lequel les comonomères sont choisis dans le groupe constitué des alpha-oléfines en C4 à C10.

12. Procédé selon l'une quelconque des revendications 9 à 12 dans lequel un gaz barrière est introduit dans le réacteur de polymérisation à lit décanté au-dessus du niveau supérieur du lit décanté.
